# FASCICULE DE BREVET EUROPEEN

(11) **EP 2 679 973 B1**
(45) Date de publication et mention de la délivrance du brevet: **29.07.2015**
(21) Numéro de dépôt: 13173810.6
(22) Date de dépôt: 26.06.2013
(51) Int. Cl.: G01M 3/18, G01M 3/28, G01M 3/40, G01S 13/90, G01M 3/00

(54) **Localisation de fuite dans une canalisation**
Lokalisierung eines Lecks in einer Kanalisation
Location of a leak in a pipeline

(30) Priorité: 28.06.2012 FR 1256152
(43) Date de publication de la demande: 01.01.2014
(73) Titulaire: COMMISSARIAT A L'ENERGIE ATOMIQUE ET AUX ENERGIES ALTERNATIVES, 75015 Paris (FR)
(72) Inventeur: Calvanese Strinati, Emilio, 38000 GRENOBLE (FR)
(74) Mandataire: Thibon, Laurent

(56) Documents cités:
- EP-A1- 2 352 002
- EP-A2- 1 193 470
- US-A- 5 805 098
- US-A1- 2010 064 775

## Description

### Domaine de l'invention

La présente invention concerne de façon générale la détection d'un évènement dans une canalisation et, plus particulièrement, la détection et la localisation d'une fuite d'un fluide circulant dans une canalisation enterrée ou d'un autre évènement touchant cette canalisation.

### Exposé de l'art antérieur

La détection, puis la localisation, d'une fuite dans une canalisation constituent des problèmes récurrents pour lesquels on a déjà proposé de nombreuses solutions, que ce soit pour des canalisations d'eau, des gazoducs ou des oléoducs.

S'il est relativement aisé de savoir qu'une canalisation présente une fuite entre deux points en détectant une perte de débit à l'arrivée, localiser cette fuite est souvent plus difficile. Par ailleurs, la localisation d'une fuite est d'autant plus difficile que la canalisation est enterrée profondément. En outre, la position des canalisations est souvent inconnue de l'exploitant d'un réseau de canalisations.

Parmi les techniques existantes pour détecter une fuite dans une canalisation, on peut citer :
les capteurs placés à intervalles réguliers le long de la canalisation pour analyser l'évolution de la pression, par exemple en utilisant des ondes acoustiques, des systèmes de corrélation ; et
les capteurs nageurs qui circulent dans la canalisation et qui détectent des variations de pression.

Pour localiser la fuite, il faut ensuite transmettre l'information fournie par de tels capteurs.

Dans le premier cas (capteurs placés à intervalles réguliers), la technique la plus simple consiste à faire circuler un câble de transmission de données le long de la canalisation. Cette technique est particulièrement onéreuse. On a également proposé d'utiliser des ondes radio, par exemple, en équipant les capteurs d'un transpondeur électromagnétique à la manière d'une étiquette RFID. Toutefois, la portée d'un tel système n'excède pas quelques mètres et n'est pas applicable aux canalisations profondes.

Une difficulté supplémentaire en présence de canalisations enterrées est que la cartographie des canalisations est souvent imprécise. Cela ne pose que peu de problèmes dans le cas de canalisation de distribution urbaine en raison de la forte densité de ces canalisations. Toutefois, pour des canalisations de transport d'un tel réseau qui véhiculent le fluide sur des dizaines, voire des centaines de kilomètres à grande profondeur, cela devient problématique.

En outre, dans une application à un réseau de transport d'eau potable, il est non seulement important de détecter et localiser la fuite pour pouvoir la réparer, mais il est également utile de savoir si cette fuite engendre une pollution, par exemple bactériologique, de l'eau qui circule. En effet, si c'est le cas, il faut interrompre la distribution d'eau pour des questions sanitaires alors que, sinon, la fuite est gênante en ce que l'on perd de l'eau, mais n'est pas forcément dangereuse.

Ce problème existe également dans le cas d'un transport d'hydrocarbures ou de gaz, par exemple pour détecter une infiltration d'eau dans un hydrocarbure ou s'assurer de la pureté du fluide transporté.

Les documents EP 2352002 et US2010/064775 décrivent des procédés et dispositifs de détection et localisation d'une fuite dans une canalisation. Le document US 5805098 décrit un radar pour détecter des nappes d'eau ou d'un fluide autour d'une canalisation.

### Résumé

Un objet d'un mode de réalisation de la présente invention est de permettre la localisation d'un évènement dans une canalisation, par exemple une fuite dans une canalisation.

Un autre objet d'un mode de réalisation de la présente invention est de proposer une solution qui s'applique quelle que soit la profondeur à laquelle est enterrée la canalisation.

Un autre objet d'un mode de réalisation de la présente invention est de proposer une solution ne nécessitant pas de modifier les détecteurs de fuite existants.

Un autre objet d'un mode de réalisation de la présente invention est de proposer une solution compatible avec une transmission d'informations supplémentaires à l'existence d'une fuite comme, par exemple, la présence de corps étrangers au fluide transporté, une pollution de ce fluide, la nature ou l'importance de la fuite, etc.

Un autre objet d'un mode de réalisation de la présente invention est de proposer une solution compatible avec les détecteurs qui existent pour détecter de telles informations supplémentaires.

Pour atteindre tout ou partie de ces objets ainsi que d'autres on prévoit un procédé comportant les étapes suivante :
détecter localement un évènement dans une canalisation ;
générer au moins un signal, codé en fonction de l'évènement détecté ; et
repérer une signature en fréquence dudit signal dans des images produites par un radar à synthèse d'ouverture.

Selon un mode de réalisation de la présente invention, ledit évènement est détecté par des capteurs nageurs ou des détecteurs placés le long de la canalisation, de préférence, à intervalles réguliers.

Selon un mode de réalisation de la présente invention, ledit évènement est une fuite.

Selon un mode de réalisation de la présente invention, le codage du signal est fonction d'un ou plusieurs paramètres parmi lesquels la présence d'une fuite, l'importance de la fuite, la présence d'un polluant, un dysfonctionnement du détecteur, un identifiant du détecteur.

Selon un mode de réalisation de la présente invention, le signal codé est variable dans le temps et prend successivement des valeurs correspondant auxdits paramètres.

Selon un mode de réalisation de la présente invention, en cas de détection d'un évènement lors d'un premier passage du radar, ce dernier est configuré pour augmenter sa résolution dans la région de l'évènement lors d'un passage ultérieur.

Selon un mode de réalisation de la présente invention, en cas de détection d'un évènement lors d'un passage d'un premier radar, ladite localisation est affinée lors d'au moins un passage d'un deuxième radar de résolution différente.

On prévoit également un système comportant :
au moins un détecteur d'un évènement dans une canalisation ;
au moins un dispositif adapté à générer au moins un signal codé en fonction de l'évènement détecté ; et
au moins un radar à synthèse d'ouverture pour repérer une signature en fréquence dudit signal.

Selon un mode de réalisation de la présente invention, le système comporte en outre au moins un système informatique de traitement de données fournies par le radar.

Selon un mode de réalisation de la présente invention, le détecteur est relié au dispositif.

Selon un mode de réalisation de la présente invention, la canalisation est enterrée.

Selon un mode de réalisation de la présente invention, le dispositif est positionné en fonction de la portée du radar.

Selon un mode de réalisation de la présente invention, le système comporte en outre au moins un détecteur de présence d'un polluant ou corps étranger dans la canalisation.

On prévoit également un dispositif de génération d'un signal adapté à un tel système.

Selon un mode de réalisation de la présente invention, le système comporte :
un circuit actionneur sous commande du détecteur ; et
un circuit d'émission d'un signal codé sous commande de l'actionneur.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est une représentation très schématique d'un mode de réalisation d'un système de localisation de fuite dans une canalisation ;
la figure 2 est une représentation très schématique d'un mode de réalisation d'un dispositif émetteur du système de la figure 1 ;
les figures 3, 4 et 5 illustrent des exemples de réalisation de dispositifs émetteurs ; et
les figures 6A et 6B, 7A et 7B, 8A et 8B, 9A et 9B, 10A et 10B, illustrent le fonctionnement du système de la figure 1, respectivement en l'absence et en présence d'une fuite.

### Description détaillée

De mêmes éléments ont été désignés par de mêmes références aux différentes figures qui ont été tracées sans respect d'échelle. De plus, seuls les étapes et éléments utiles à la compréhension des modes de réalisation qui vont être décrits ont été représentés et seront détaillés. En particulier, les détecteurs de fuite, que ce soit par analyse de pression, par utilisation d'ondes acoustiques, etc. n'ont pas été détaillés, les modes de réalisation décrits étant compatibles avec les détecteurs usuels, qu'il s'agisse de simples détecteurs de fuites ou de détecteurs plus évolués détectant également la présence d'un polluant ou de tout autre détecteur d'évènement. De même, l'exploitation faite des informations reçues n'a pas été détaillée, les modes de réalisation décrits étant, là encore, compatibles avec l'exploitation usuelle de données relatives à des fuites dans des canalisations.

L'invention sera décrite par la suite en relation avec un exemple de localisation de fuite mais elle s'applique plus généralement à la localisation d'un évènement quelconque touchant une canalisation ou un fluide qu'elle transporte, pourvu qu'il soit détectable localement. De même, on se focalisera sur l'exemple d'une canalisation enterrée, sachant que l'invention s'applique à toute canalisation qu'elle soit directement en terre, à l'air libre, dans un tunnel, un conduit souterrain, etc., et quelle que soit l'importance du réseau de canalisations dont cette canalisation fait le cas échéant partie.

On prévoit d'utiliser un radar à synthèse d'ouverture (RSO), habituellement désignés par son appellation anglo-saxonne Synthetic Aperture Radar (SAR).

Un tel radar est en lui-même bien connu. L'antenne du radar est généralement fixée sur un satellite ou sur un avion et a généralement une ouverture azimutale de plusieurs degrés dans la direction du mouvement et latéralement. Le radar émet des impulsions d'ondes radio à des longueurs d'ondes allant de quelques mètres à quelques millimètres. Comme le radar se déplace, la même zone ou le même point est illuminé plusieurs fois. On obtient ainsi une série de données pour chaque zone ou point sous le radar. Les échos reçus aux différentes positions de l'antenne sont combinés pour obtenir des images des zones observées comme si on utilisait une large antenne à très grande résolution. Par analyse des transformées de Fourier et des différences de phase, point à point entre les images, un radar RSO permet non seulement d'obtenir une cartographie en relief du sol, mais également une information sur la nature des éléments rencontrés. En effet, selon leur composition, ces éléments ont des réponses ou signatures fréquentielles différentes. La cohérence des zones observées dépend non seulement de la géométrie d'acquisition des images, mais aussi de la nature de la zone. Ainsi, il est possible, par traitement des images obtenues, de localiser des zones de natures différentes.

L'utilisation d'un radar de type RSO présente l'avantage de couvrir des zones importantes ainsi que des zones difficiles d'accès.

Par ailleurs, ils permettent de détecter des évènements sous la surface de la terre. La profondeur de détection qui peut atteindre plusieurs dizaines de mètres dépend de la résolution du radar et de la nature du sol.

On aurait pu penser exploiter des images d'un radar RSO pour détecter des nappes d'eau ou d'un fluide autour d'une canalisation et en déduire l'existence potentielle d'une fuite. En effet, les radars RSO ont déjà été utilisés pour détecter la présence de nappes d'eau sous le sol. Toutefois, il faudrait pour cela connaître avec exactitude la cartographie des canalisations, ce qui n'est pas le cas. De plus, la détection serait perturbée par toute présence d'une nappe de fluide entre le sol et la canalisation. En outre, il serait impossible de distinguer la présence d'une nappe naturelle d'une fuite.

On prévoit néanmoins de tirer profit de la capacité des radars RSO à fournir des signaux exploitables pour dresser des cartographies de réponses fréquentielles des zones survolées, afin de localiser des détecteurs de fuite placés le long d'une canalisation. Pour cela, on associe, à ces détecteurs, des circuits de génération d'un signal déterminé, actionnés en présence de fuite. En d'autres termes, alors qu'un radar RSO interprète généralement des signatures passives du sol ou des profondeurs, on l'utilise pour transmettre une information émise par un dispositif à destination d'un centre d'interprétation et de traitement. Ce centre de traitement reçoit les images produites par le radar et traite ces images pour reconstituer une cartographie de la zone. Cette cartographie va se trouver modifiée en cas d'émission d'un code ou motif par un des dispositifs associés aux détecteurs.

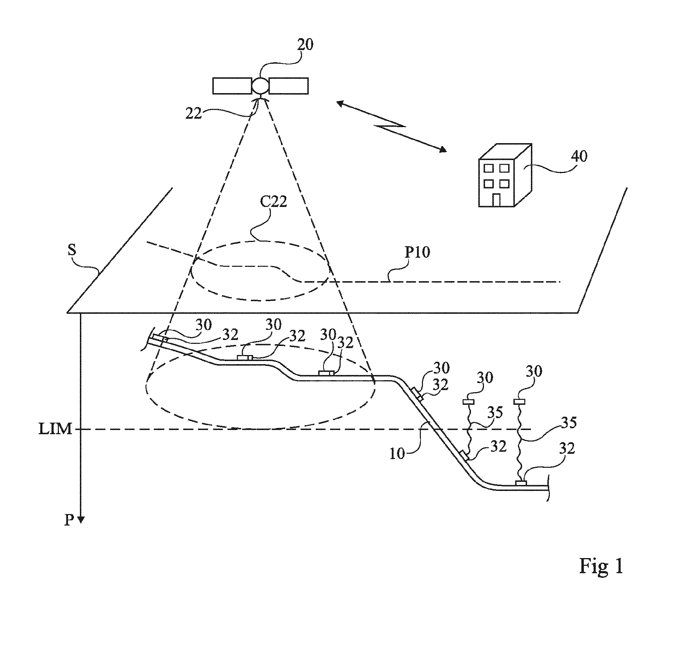

La figure 1 représente, de façon très schématique, un mode de réalisation d'un système de détection et de localisation de fuite dans une canalisation 10 enterrée. Cette figure représente une zone géographique incluant la canalisation 10 et survolée par un radar RSO (symbolisé par son antenne 22) porté par un satellite 20 ou, en variante, par un avion non représenté. La canalisation 10 suit, au sol, un tracé quelconque. Le tracé est symbolisé par un pointillé P10 en figure 1.

La canalisation 10 est équipée de détecteurs 32 et de dispositifs 30 de codage et d'émission d'informations fournies par ces détecteurs.

Le cône du radar 22 illumine une zone (pointillé C22) au sol qui se déplace avec le déplacement du satellite 20. En profondeur P, les rayons rencontrent les différents constituants du sol ainsi que la canalisation 10. Au repos, c'est-à-dire en l'absence de fuite, les dispositifs sont par exemple en veille et n'émettent rien. Lorsqu'un dispositif 30 est activé par le détecteur auquel il est associé, il se met à émettre un signal, de préférence répétitif, périodique ou non, qui va modifier la signature en fréquence de la zone dans laquelle est ce dispositif. La cartographie de cette zone va donc être modifiée en présence d'une fuite. L'interprétation de cette cartographie permet non seulement de détecter la fuite, mais également de localiser le détecteur qui l'a signalée. Les images du radar RSO sont traitées par un centre 40 au sol, équipé des systèmes informatiques nécessaires à la reconstitution de la cartographie.

Selon la profondeur de la canalisation 10, les dispositifs 30 peuvent être combinés aux détecteurs (partie gauche de la figure 1) ou être placés plus près de la surface (partie droite de la figure 1) pour être à portée des radars RSO. Dans ce dernier cas, ils sont reliés aux détecteurs par des liaisons filaires ou sans fils (ondes radio ou acoustiques, par exemple).

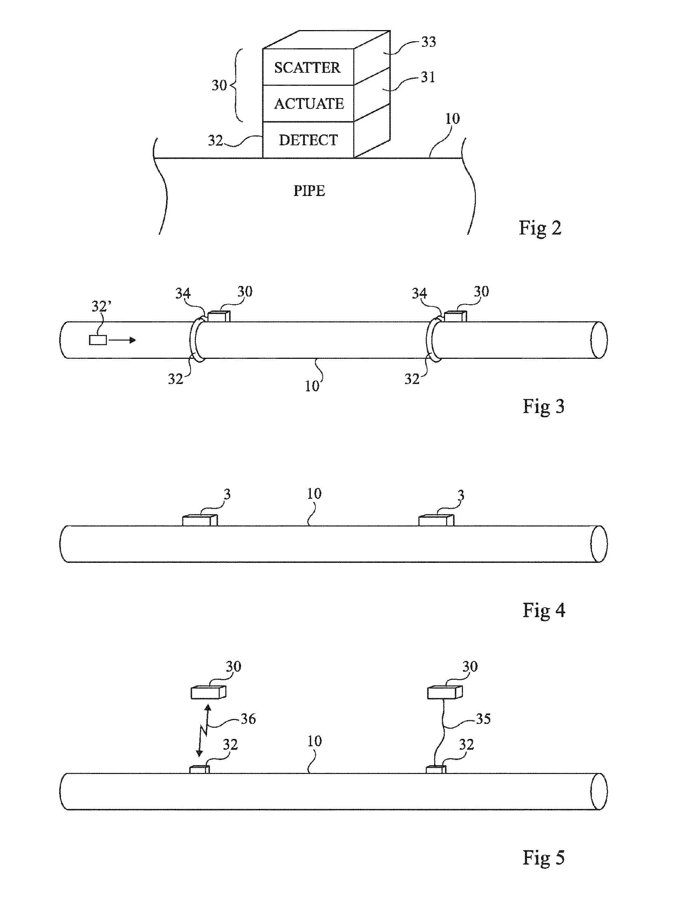

La figure 2 représente, de façon très schématique et sous forme de blocs, des éléments du système placés côté canalisation 10 (PIPE). Le détecteur 32 (DETECT) est placé contre le tuyau 10 pour analyser, par exemple par ondes acoustiques, mais plus généralement par toute technique usuelle de détection de fuite, le fluide circulant dans la canalisation et détecter une fuite éventuelle. Le dispositif 30 comporte un actionneur 31 (ACTUATE), ou codeur, activé par le détecteur 32, et un circuit 33 de diffusion (SCATTER), ou d'émission, d'un signal incluant le code ou motif déterminé, fonction de l'information à transmettre. Il n'est pas nécessaire d'émettre à forte puissance. L'important est que la génération du motif perturbe la réponse en fréquence de la zone d'une façon qui soit détectable par le radar RSO.

Le signal est émis, par exemple par une antenne ou un réseau d'antennes passif ou actif qui génère une empreinte ou signature spectrale dans la zone du dispositif 30. Le signal est codé en fonction de l'évènement.

Selon les réalisations, on peut prévoir que les trois éléments 31, 32 et 33 soient inclus dans un même élément, par exemple un dispositif attaché à la canalisation, ou qu'ils soient séparés.

La figure 3 représente un mode de réalisation d'un tronçon de canalisation 10. Le détecteur de fuite est constitué d'un capteur nageur 32' circulant avec le fluide dans la canalisation 10 et émettant des informations à destination de détecteurs 32, généralement annulaires, répartis le long de la canalisation. L'ensemble capteur nageur 32' et détecteur 32 constitue un dispositif de détection usuel. Le détecteur 32 communique avec un dispositif 30 (codeur 31 et émetteur 33), dans l'exemple représenté, par une liaison filaire 34. Tout autre type de liaison est envisageable.

La figure 4 représente un tronçon de canalisation 10 selon un autre mode de réalisation du type de celui de la figure 2 dans lequel le détecteur 32 et le dispositif 30 sont inclus dans un même dispositif 3.

La figure 5 représente un tronçon de canalisation 10 selon encore un autre mode de réalisation, plus particulièrement destiné au cas où la canalisation 10 est enterrée à une profondeur supérieure à la limite de détection du radar RSO. On prévoit alors d'enterrer le dispositif 30 (ou au moins le circuit 33 d'émission) à une profondeur à portée du radar, inférieure à celle de la canalisation. Le détecteur (ou un élément incluant le détecteur 32 et le circuit 31) est, par exemple, enterré avec la canalisation et communique, avec le dispositif 30 (ou le circuit 33) distant, grâce à une liaison filaire 35 ou sans fil 36. La profondeur limite (LIM, figure 1) dépend de la puissance du radar, de la nature du terrain, du nombre de passages du radar, de la résolution des images, et même du motif émis par le dispositif 30 qui peut être plus ou moins facilement détecté par le radar. Cette profondeur limite peut donc varier le long de la canalisation. Elle peut, par exemple, être déterminée lors de la pose de la canalisation en exploitant un passage test du radar. On trouve aujourd'hui des radars RSO qui sont susceptibles de détecter des signatures jusqu'à une profondeur de plusieurs dizaines de mètres.

Les différents modes de réalisation du dispositif côté canalisation sont combinables et différents modes de réalisation peuvent être présents le long d'une même canalisation, par exemple selon la profondeur de la canalisation.

L'alimentation des circuits 31 et 33, ainsi que du détecteur, peut provenir de batteries intégrées à ces circuits ou de dispositifs extrayant l'énergie de la circulation elle-même (turbines à eau par exemple). De préférence, on choisira un motif ou code peu gourmand en énergie.

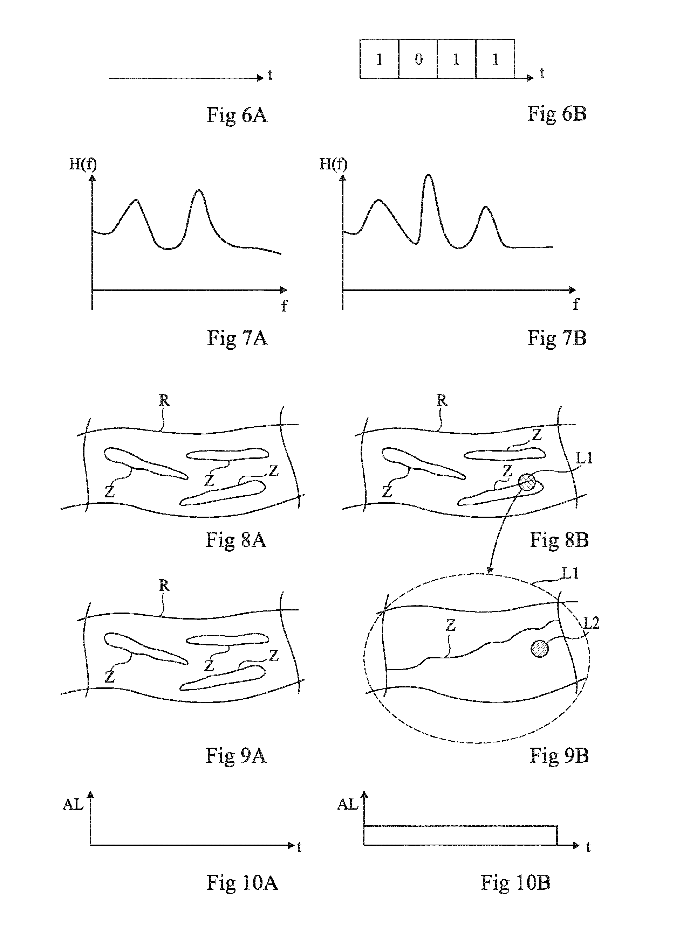

Les figures 6 à 10 illustrent le fonctionnement du système de la figure 1. Les figures 6A, 7A, 8A, 9A et 10A illustrent le fonctionnent en l'absence de fuite. Les figures 6B, 7B, 8B, 9B et 10B illustrent le fonctionnement en présence d'une fuite.

On suppose qu'en l'absence de fuite, le dispositif 30 est au repos (figure 6A). Aucun signal n'est émis. La réponse en fréquence (figure 7A) de la région R illuminée par le radar correspond alors à une réponse au repos. La reconstitution de l'image (figure 8A) ne fournit pas d'informations autres que les informations habituellement captées par le radar. On a arbitrairement représenté des zones Z ayant des réponses en fréquence différentes en figure 8A. Il s'agit, par exemple, de reliefs différents ou de natures de sol différentes.

En variante, un signal est émis même au repos, par exemple, pour confirmer le bon fonctionnement du dispositif enterré, ceci toutefois au prix d'une consommation accrue.

En présence d'une fuite, le circuit 31 génère un code signalant ou identifiant cette fuite (figure 6B). Le code peut être plus ou moins élaboré en fonction de l'information à transmettre. Les trames de transmission de ce code sont, de préférence, périodiques. La longueur de la trame dépend, entre autres, du code ou motif à transmettre. Le cas échéant, la trame comporte un préambule contenant un identifiant du détecteur de façon à permettre d'en identifier le type, voire le numéro de série. Le code peut également contenir, par exemple dans des trames ou paquets successifs, différentes informations comme par exemple, l'indication d'une fuite puis une caractérisation de cette fuite. Dans l'exemple arbitrairement choisi de la figure 6B, on suppose le cas d'un code sur 4 bits.

Cette transmission, une fois transformée par le circuit 33, modifie le spectre fréquentiel H(f) de la réponse de la zone du détecteur (figure 7B). Dans la région R illuminée par le radar, cette zone est détectable. Cette détection peut être effectuée en comparant l'image à une image de référence en l'absence de fuite. De préférence, pour éviter l'utilisation d'une image de référence, on détecte plutôt l'existence, dans l'image, de raies de fréquences caractéristiques du motif émis.

Selon la résolution du radar, cette détermination peut ou non suffire à la localisation. Si cette résolution n'est pas suffisante, ce qui sera le cas dans la plupart des situations afin de simplifier le traitement de la majorité des images, lorsqu'on identifie une zone L1 contenant une fuite, on modifie la programmation du radar afin que, lors du prochain passage, il augmente sa résolution en se focalisant sur cette zone L1 (figure 9B). A l'issue de ce second passage, les images produites par le radar permettent d'affiner la position et de localiser une zone L2 plus précise. On peut encore affiner la détection en augmentant la résolution lors de passages ultérieurs du radar. On peut également prévoir d'exploiter les images provenant de plusieurs radars, par exemple le passage d'un radar porté par un satellite, puis celui d'un radar porté par un avion ou un autre satellite avec une résolution plus précise.

Le traitement des images conduit, en présence de fuite, à un traitement particulier, par exemple, l'activation d'un signal avertisseur AL (figure 10B) au niveau du centre de traitement.

Comme l'illustrent les figures 9A et 10A, en l'absence de fuite, aucun zoom n'est effectué sur la région R (figure 9A) et aucune alerte n'est générée (figure 10A).

Le code ou motif de diffusion est, de préférence, choisi pour que la signature fréquentielle qu'il représente sur la réponse de la zone ait une faible probabilité de se retrouver sous l'effet d'une autre modification du milieu. Cela facilite l'interprétation des images. Toutefois, dans la mesure où la signature émise en cas de fuite est émise périodiquement et peut même évoluer avec le temps pour être différente lorsque le radar fait un deuxième passage en focalisant sur une zone réduite après qu'une fuite ait été localisée dans une zone large, le risque de fausse interprétation est faible avec un traitement d'image approprié. En effet, il faudrait que la signature perturbatrice soit non seulement identique à la signature émise, mais de plus qu'elle soit immobile et en outre qu'elle soit le cas échéant modifiée de façon similaire.

Parmi les informations susceptibles de faire l'objet d'un motif de diffusion, on prévoit, de façon non limitative, la présence d'une fuite, l'importance de la fuite, la présence de polluant, un dysfonctionnement du détecteur, etc. Ce motif peut en outre inclure un identifiant du détecteur, par exemple, pour faciliter la localisation ou connaitre le type de détecteur. La transmission d'un identifiant du détecteur peut, selon une variante de réalisation, permettre le partage d'un même dispositif 30 (ou au moins d'un même circuit 33) par plusieurs détecteurs 32. Dans un tel cas, le radar 22 localise le dispositif 30 et l'identifiant du détecteur permet d'affiner la localisation, pourvu que l'on ait mémorisé les identifiants en relation avec leurs positions par rapport au dispositif 30. Par exemple, dans le cas de trois détecteurs 32 partageant un même dispositif 30, les détecteurs dont la position est mémorisée sont le détecteur amont, le détecteur aval, et le détecteur intermédiaire associé ou à l'aplomb du dispositif 30.

La mise en oeuvre du système requiert d'implanter des dispositifs 30 sur des canalisations. Une telle implantation peut être effectuée lors de la pose de la canalisation ou lors d'interventions de maintenance sur tout ou partie de la canalisation.

Les modes de réalisation décrits sont particulièrement adaptés à des réseaux de canalisation dans des zones faiblement urbanisées. En effet, cela simplifie le traitement des images en minimisant le risque de voir des éléments (par exemple des véhicules) perturber la signature fréquentielle avec une signature proche des codes émis. Toutefois, cela n'exclut pas une mise en oeuvre dans des réseaux de distribution en zone davantage urbanisée.

Une application préférée est la détection de fuite dans les réseaux de transport d'eau, par exemple dans les zones désertiques, où la détection est généralement difficile en raison de la taille du réseau. L'homogénéité du sol facilite l'interprétation des images.

Un avantage des modes de réalisation qui ont été décrits est qu'il n'est pas nécessaire de connaître à l'avance la cartographie des canalisations équipées.

Un autre avantage est qu'il n'est pas nécessaire de modifier le radar RSO. En effet, on se contente d'interpréter les images qu'il fournit. Par conséquent, la mise en oeuvre des modes de réalisation décrits peut exploiter des images fournies par des radars RSO existants.

Un autre avantage est qu'il est possible de coder différentes informations et, ainsi, de transmettre des données supplémentaires à la simple présence d'une fuite. On peut par exemple renseigner l'importance de la fuite, la présence d'un polluant et, plus généralement, transmettre toute information détectée par un détecteur.

Divers modes de réalisation ont été décrits. Diverses variantes et modifications apparaîtront à l'homme de l'art. En particulier, le choix des codes ou motifs de diffusion dépend, entre autres, du nombre d'informations différentes que l'on souhaite pouvoir transmettre. De plus, la durée pendant laquelle on transmet les motifs peut également varier et dépendre, par exemple, du fait que l'on souhaite affiner l'information transmise lors d'un deuxième passage du radar RSO.

En outre, la mise en oeuvre pratique des modes de réalisation décrits est à la portée de l'homme du métier à partir des indications fonctionnelles données ci-dessus et en utilisant des détecteurs de fuite et radars RSO usuels et en adaptant des circuits électroniques et systèmes informatiques en eux-mêmes usuels. En particulier, le traitement des images fournies par un radar RSO est une technique aujourd'hui maitrisée. Enfin, on notera que l'on peut se contenter d'exploiter la caractérisation de l'évènement sans la localisation (par exemple, si la position de la canalisation et des détecteurs est connue). Dans un tel cas, les informations caractérisant l'évènement ainsi que préférentiellement l'identification du détecteur suffisent. Bien qu'en pratique, les images fournies par le radar localisent plus ou moins la zone, cela peut permettre d'utiliser des images avec une résolution plus grossière.

## Revendications

1. Procédé de localisation ou de caractérisation d'un évènement dans une canalisation comportant les étapes suivantes :
détecter (32) localement un évènement dans une canalisation (10) ;
générer (30) au moins un signal, codé en fonction de l'évènement détecté ; **caractérisé en ce qu'**il comporte l'étape consistant à
repérer une signature en fréquence dudit signal dans des images produites par un radar à synthèse d'ouverture (22).

2. Procédé selon la revendication 1, dans lequel ledit évènement est détecté par des capteurs nageurs ou des détecteurs placés le long de la canalisation, de préférence, à intervalles réguliers.

3. Procédé selon la revendication 1 ou 2, dans lequel ledit évènement est une fuite.

4. Procédé selon l'une quelconque des revendications 1 à 3, dans lequel le codage du signal est fonction d'un ou plusieurs paramètres parmi lesquels la présence d'une fuite, l'importance de la fuite, la présence d'un polluant, un dysfonctionnement du détecteur, un identifiant du détecteur.

5. Procédé selon la revendication 4, dans lequel le signal codé est variable dans le temps et prend successivement des valeurs correspondant auxdits paramètres.

6. Procédé selon l'une quelconque des revendications 1 à 5, dans lequel, en cas de détection d'un évènement lors d'un premier passage du radar (22), ce dernier est configuré pour augmenter sa résolution dans la région (L1) de l'évènement lors d'un passage ultérieur.

7. Procédé selon l'une quelconque des revendications 1 à 5, dans lequel, en cas de détection d'un évènement lors d'un passage d'un premier radar (22), ladite localisation est affinée lors d'au moins un passage d'un deuxième radar de résolution différente.

8. Système de localisation ou de caractérisation d'un évènement dans une canalisation comportant :
au moins un détecteur (32, 32') d'un évènement dans une canalisation (10) ;
au moins un dispositif (30) adapté à générer au moins un signal codé en fonction de l'évènement détecté ; **caractérisé en ce qu'**il comprend au moins un radar (22) à synthèse d'ouverture adapté à repérer une signature en fréquence dudit signal.

9. Système selon la revendication 8, comportant en outre au moins un système informatique (40) de traitement de données fournies par le radar (22).

10. Système selon la revendication 8 ou 9, dans lequel le détecteur (32) est relié au dispositif (30).

11. Système selon l'une quelconque des revendications 8 à 10, dans lequel la canalisation (10) est enterrée.

12. Système selon l'une quelconque des revendications 8 à 11, dans lequel le dispositif (30) est positionné en fonction de la portée du radar.

13. Système selon l'une quelconque des revendications 8 à 12, comportant en outre au moins un détecteur (32) de présence d'un polluant ou corps étranger dans la canalisation (10).

## Patentansprüche

1. Ein Verfahren zur Lokalisierung der Charakterisierung eines Ereignisses in einem Rohr, wobei die folgenden Schritte vorgesehen sind:
örtliches detektieren (32) eines Ereignisses in einem Rohr (10);
erzeugen (30) von mindestens einem Signal, kodiert entsprechend dem detektierten Ereignis; und
**dadurch gekennzeichnet, dass** das Verfahren den folgenden Schritt aufweist:
detektieren einer Frequenzsignatur des erwähnten Signals in durch einen Radar (22) mit synthetischer Apertur erzeugten Bildern.

2. Das Verfahren nach Anspruch 1, wobei das erwähnte Ereignis durch schwimmende Sensoren detektiert wird oder durch Detektoren die entlang des Rohres vorzugesweise mit regelmäßigen Intervallen platziert sind.

3. Das Verfahren nach Anspruch 1 oder 2, wobei das Ereignis ein Leck ist.

4. Das Verfahren nach einem der Ansprüche 1 bis 3, wobei die Signalkodierung eine Funktion eines oder mehrerer Parameter ist, zu denen folgende gehören:
das Vorhandensein eines Lecks, die Größe des Lecks, das Vorhandensein einer Verunreinigung, eine Fehlfunktion des Detektors, eine Identifizierung des Detektors.

5. Das Verfahren nach Anspruch 4, wobei das kodierte Signal längs der Zeit variabel ist und auf aufeinanderfolgend Werte entsprechend den Parametern annimmt.

6. Das Verfahren nach einem der Ansprüche 1 bis 5, wobei im Falle wo ein Ereignis in einem ersten Durchgang des Radars (22) detektiert wird, letzterer konfiguriert ist, um seine Auflösung in der Zone (L1) des Ereignisses für den darauffolgenden Durchgang zu vergrößern.

7. Das Verfahren nach einem der Ansprüche 1 bis 5, wobei in dem Fall wo ein Ereignis beim Durchgang eines ersten Radars (22) detektiert wird, die erwähnte Stelle verfeinert wird und zwar während mindestens eines Durchgangs eines zweiten Radars von unterschiedlicher Auflösung.

8. Ein System zur Lokalisierung der Charakterisierung eines Ereignisses in einem Rohr, wobei folgendes Vorgesehen ist:
mindestens ein Detektor (32, 32') eines Ereignisses in einem Rohr (10); mindestens eine Vorrichtung (30) die in der Lage ist mindestens ein Signal kodiert gemäß dem detektierten Ereignis zu erzeugen;
**dadurch gekennzeichnet, dass** das System folgendes aufweist:
mindestens einen Radar (22) mit synthetischer Apertur geeignet zum Detektieren einer Frequenzsignatur des erwähnten Signals.

9. Das System nach Anspruch 8, wobei ferner mindestens ein Computersystem (40) vorgesehen ist zur Verarbeitung von durch das Radar (22) vorgesehenen Daten.

10. Das System nach Anspruch 8 oder 9, wobei der Detektor (32) mit der Vorrichtung (30) verbunden ist.

11. Das System nach einem der Ansprüche 8 bis 10, wobei das Rohr (10) vergraben ist.

12. Das System nach einem der Ansprüche 8 bis 11, wobei die Vorrichtung (30) entsprechend dem Bereich des Radars positioniert ist.

13. Das System nach einem der Ansprüche 8 bis 12, wobei ferner mindestens ein Detektor (32) vorgesehen ist für die Anwesenheit einer Verunreinigung oder eines Fremdkörpers in dem Rohr (10).

## Claims

1. A method for the localization of the characterization of an event in a pipe comprising the steps of:
locally detecting (32) an event in a pipe (10);
generating (30) at least one signal, coded according to the detected event; and
**characterized in that** it comprises the step of:
detecting a frequency signature of said signal in images generated by a synthetic aperture radar (22).

2. The method of claim 1, wherein said event is detected by swimming sensors or by detectors placed along the pipe, preferably at regular intervals.

3. The method of claim 1 or 2, wherein said event is a leak.

4. The method of any of claims 1 to 3, wherein the signal coding is a function of one or several parameters, among which the presence of a leak, the size of the leak, the presence of a contaminant, a malfunction of the detector, an identifier of the detector.

5. The method of claim 4, wherein the coded signal is variable along time and successively takes values corresponding to said parameters.

6. The method of any of claims 1 to 5, wherein in the case where an event is detected in a first passage of the radar (22), the latter is configured to increase its resolution in the region (L1) of the event for a subsequent passage.

7. The method of any of claims 1 to 5, wherein in the case where an event is detected at the passage of a first radar (22), said location is refined during at least one passage of a second radar of different resolution.

8. A system for the localization of the characterization of an event in a pipe comprising:
at least one detector (32, 32') of an event in a pipe (10);
at least one device (30) capable of generating at least one signal coded according to the detected event;
**characterized in that** it comprises:
at least one synthetic aperture radar (22) adapted to detect a frequency signature of said signal.

9. The system of claim 8, further comprising at least one computer system (40) for processing data provided by the radar (22).

10. The system of claim 8 or 9, wherein the detector (32) is connected to the device (30).

11. The system of any of claims 8 to 10, wherein the pipe (10) is buried.

12. The system of any of claims 8 to 11, wherein the device (30) is positioned according to the range of the radar.

13. The system of any of claims 8 to 12, further comprising at least one detector (32) of the presence of a contaminant or foreign body in the pipe (10).
